# EUROPÄISCHE PATENTSCHRIFT

(11) **EP 2 976 571 B1**
(45) Veröffentlichungstag und Bekanntmachung des Hinweises auf die Patenterteilung: **10.05.2017**
(21) Anmeldenummer: 14716753.0
(22) Anmeldetag: 17.03.2014
(51) Int. Cl.: F23N 5/02, F23N 1/00, F23N 5/06, G05D 7/06, G05D 23/01, F16L 15/08, F16K 31/00

(54) **GASREGELARMATUR**
GAS CONTROL VALVE
ROBINET DE RÉGULATION DE GAZ

(30) Priorität: 18.03.2013 DE 102013004745
(43) Veröffentlichungstag der Anmeldung: 27.01.2016
(73) Patentinhaber: Mertik Maxitrol GmbH & Co. Kg, 06502 Thale (DE)
(72) Erfinder: HAPPE, Barbara, 06507 Gernrode (DE); KEIL, Peter, 06502 Thale (DE)
(86) Internationale Anmeldenummer: PCT/EP2014/000718
(87) Internationale Veröffentlichungsnummer: WO 2014/146777

(56) Entgegenhaltungen:
- DE-A1-102009 011 611
- DE-U1- 29 905 204
- US-A- 2 724 409
- US-A- 2 783 946
- US-A- 2 857 103

## Beschreibung

### Technisches Gebiet

Die Erfindung betrifft eine Gasregelarmatur für ein gasbetriebenes Heizgerät nach dem Oberbegriff des ersten Patentanspruches.

### Stand der Technik

Gasregelarmaturen für gasbetriebene Heizgeräte dienen zur Zündung und zur Steuerung bzw. Regelung eines einem Brenner zufließenden Gasstromes. Dabei muss die Sicherheit für Betreiber und Anlage gewährleistet sein. Als Regelgröße dient dabei üblicherweise eine Temperatur, die durch einen Temperaturfühler erfasst wird, der über eine Kapillarleitung mit einem temperaturempfindlichen Element, beispielsweise ein Metallfaltenbalg als Hubelement, verbunden ist.

So ist beispielsweise für den Einbau in Einzelraumheizern aus der DE 299 05 204 U1 eine Gasregelarmatur bekannt, die ohne Hilfsenergie arbeitet. Bei dieser Gasregelarmatur ist im Gehäuse nach dem Hauptventil das Schaltsystem eines kombinierten Proportionalreglers/Zweipunktreglers angeordnet, das über eine temperaturempfindliche Stelleinrichtung beeinflussbar ist. Die Stelleinrichtung besteht aus einem außerhalb des Gehäuses befindlichen Temperaturfühler und einem in der Gasregelarmatur angeordneten Metallfaltenbalg, die beide über eine Kapillarleitung miteinander verbunden sind, wobei alle Teile flüssigkeitsgefüllt sind. Derartige Stelleinrichtungen arbeiten nach dem Prinzip der Flüssigkeitsausdehnung bei Temperaturerhöhung. Ändert sich die Temperatur am Temperaturfühler, so bewirkt diese Änderung eine entsprechend gerichtete Bewegung des Metallfaltenbalges. Dieser Hub wird auf das Schaltsystem übertragen.

Üblicherweise sind derartige Gasregelarmaturen für einen definierten Sollwertbereich ausgelegt und werden im Rahmen der Fertigung dementsprechend einjustiert. Dies trifft auch auf die in der DE 10 2009 011 611 A1 und der US 2 783 946 A beschriebenen Gasregelarmaturen zu, bei denen Schwankungen in der Umgebungstemperatur, die zu einer wechselnden Verfälschung des eingestellten Sollwertes führen, ausgeglichen werden können.

Insbesondere in der Küchentechnik wird es jedoch gewünscht, dass die Justierung einfach korrigiert werden kann, wenn es auf Grund einer Anwendung erforderlich ist. Diese nachträgliche Verschiebung des vom Hersteller der Gasregelarmatur vorgegebenen Sollwertbereiches in einem begrenzten Bereich ist jedoch bei allen diesen weiter oben beschriebenen Gasregelarmaturen nicht möglich.

### Darstellung der Erfindung

Der Erfindung liegt das Problem zugrunde eine Gasregelarmatur zu schaffen, bei der eine nachträgliche Verschiebung des vorgegebenen Sollwertbereiches in einfacher Weise vorgenommen werden kann, um den Bereich der einstellbaren Temperatur für das Heizgerät zu optimieren, ohne die geräte- und/oder anlagenspezifischen zugelassenen Einsatzbedingungen zu überschreiten. Dies soll insbesondere ohne Eingriff in den gasführenden Raum ermöglicht werden.

Erfindungsgemäß wird das Problem dadurch gelöst, dass ein Einstellelement, das zur Veränderung der Lage eines temperaturempfindlichen Elementes und damit zur Betätigung eines Schalters zur Ansteuerung eines Ventils dient, ein in das Gehäuse der Gasregelarmatur einschraubbares Gewindestück aufweist. Dabei sind beide über eine lösbare Arretierung verdrehsicher miteinander verbunden, wobei zwischen dem das Gewindestück mit einer Ausnehmung teilweise umfassenden topfförmigen Einstellelement und dem Gewindestück ein fest mit dem Gewindestück verbundenes rohrförmiges Raststück angeordnet ist. Mit einem stirnseitig aufragenden Anschlagelement ragt das Raststück in eine Führungskontur hinein, die durch einen im Einstellelement befindlichen stirnseitigen Durchbruch gebildet wird.

Damit wurde eine Lösung gefunden, mit der es möglich ist, dass der Anwender eine nachträgliche Verschiebung des vom Hersteller der Gasregelarmatur vorgegebenen Sollwertbereiches vornehmen kann. Durch die Führungskontur wird gleichzeitig die Verschiebung des Sollwertbereiches derart begrenzt, dass die geräte- bzw. anlagenspezifisch zugelassenen Einsatzbedingungen nicht überschritten werden können. Dabei zeichnet sich die Lösung durch ihren einfachen Aufbau und ihre einfache Wirkungsweise aus.

Eine vorteilhafte Ausgestaltung ergibt sich, wenn das Raststück mit einem auf seiner äußeren zylindrischen Oberfläche zumindest teilweise vorhandenen Rastbund in eine in der Innenwandung der Ausnehmung befindliche umlaufende Rastnut hineinragt.

Auf Grund der durch Rastbund und Rastnut entstehenden Verbindung zwischen dem Einstellring und dem Raststück wird in dieser Ausgestaltung zusätzlich sichergestellt, dass ein Verschieben des Sollwertbereiches mit Überschreiten der zugelassenen Einsatzbedingungen, indem durch Demontage das Anschlagelement aus der Führungskontur entfernt wird, nicht zerstörungsfrei möglich ist.

### Ausführungsbeispiel

Die Erfindung wird nachstehend an einem Ausführungsbeispiel näher beschrieben. Es zeigen:
- Fig. 1: eine erfindungsgemäße Gasregelarmatur
- Fig. 2: eine Ansicht Z der erfindungsgemäßen Gasregelarmatur aus Fig. 1 in vergrößerter Darstellung
- Fig. 3: eine Schnittansicht A - A der erfindungsgemäßen Gasregelarmatur aus Fig. 1 in vergrößerter Darstellung.
- Fig. 4: eine Detailansicht B der erfindungsgemäßen Gasregelarmatur aus Fig. 1 in vergrößerter Darstellung.

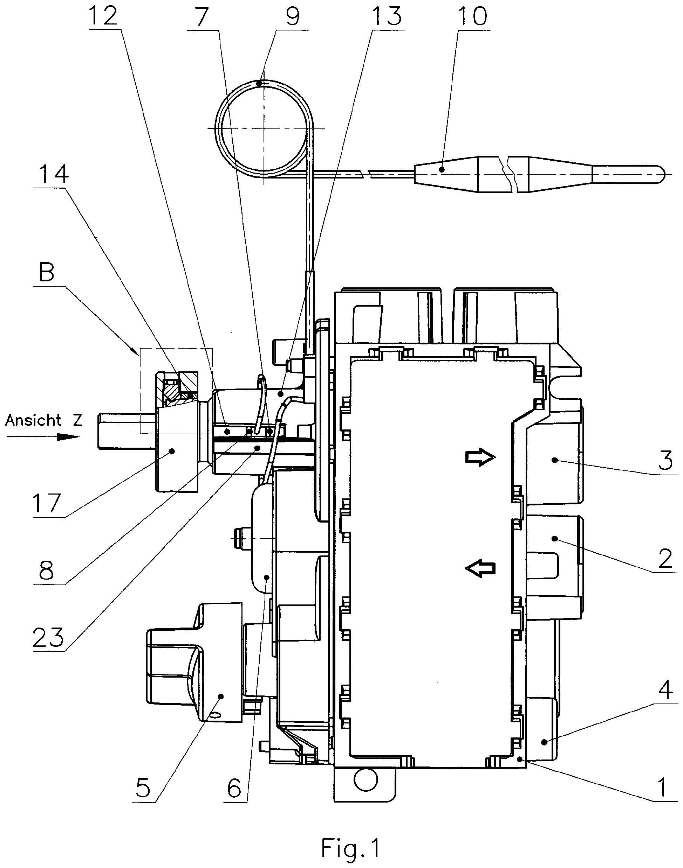

Die in der Figur 1 dargestellte beispielhafte erfindungsgemäße Gasregelarmatur ist ein Schalt- und Regelgerät, das vorzugsweise für ein gasbetriebenes Heizgerät oder dergleichen bestimmt ist. Sie ermöglicht die Bedienung und Überwachung eines Brenners, die Druckregelung, sowie die Einstellung und Regelung der gewünschten Temperatur, indem die zum Brenner strömende Gasmenge gesteuert wird.

Die Gasregelarmatur besteht aus einem Gehäuse 1, das einen durch Richtungspfeil gekennzeichneten Gaseingang 2 und einen ebenfalls durch einen Richtungspfeil gekennzeichneten Gasausgang 3, sowie einen Zündgasausgang 4 aufweist. In dem Gehäuse 1 sind in Strömungsrichtung des Gases gesehen, nachfolgende Funktionseinheiten untergebracht:
- Inbetriebnahme mit dazugehörigem Bedienungselement 5,
- Zündsicherungsventil und Hauptventil mit Wiedereinschaltverriegelung,
- Druckregler 6,
- Schaltsystem eines kombinierten Proportionalreglers/Zweipunktreglers zur Regelung der zum Brenner strömenden Gasmenge.

Aufbau und Wirkungsweise der Inbetriebnahme, des Zündsicherungs- und des Hauptventils, des Druckreglers 6 und des Schaltsystems sind dem Fachmann bekannt. Auf eine nähere Darstellung und Erläuterung der Einzelheiten wird deshalb in diesem Ausführungsbeispiel verzichtet.

Ein zum Schaltsystem zugehöriges Ventil, über welches die zum Brenner strömende Gasmenge geregelt wird, ist durch einen ebenfalls zum Schaltsystem zugehörigen Schalter ansteuerbar.

Mit dem Schalter steht ein längsbeweglicher Stößel 7 in kraftschlüssiger Verbindung. Er ragt aus dem gasführenden Raum des Gehäuses 1 heraus und stützt sich mit seinem dem Schalter abgewandten Ende an einem temperaturempfindlichen Element 8, einem Metallfaltenbalg, ab. Der Metallfaltenbalg 8 ist über eine Kapillarleitung 9 mit einem Temperaturfühler 10 verbunden. Metallfaltenbalg 8, Kapillarleitung 9 und Temperaturfühler 10 sind mit einer thermoaktiven Flüssigkeit gefüllt.

Auf seiner dem Stößel 7 abgewandten Seite stützt sich, in diesem Ausführungsbeispiel günstigerweise über eine dazwischen gelagerte Kugel 11, auf dem Metallfaltenbalg 8 ein Gewindestück 12 ab, das in einem im Inneren eines zum Gehäuse 1 zugehörigen rohrförmigen Aufsatzes 13 befindlichen Gewinde schraubbar geführt ist, um im Rahmen der Fertigung eine Temperaturjustierung vornehmen zu können.

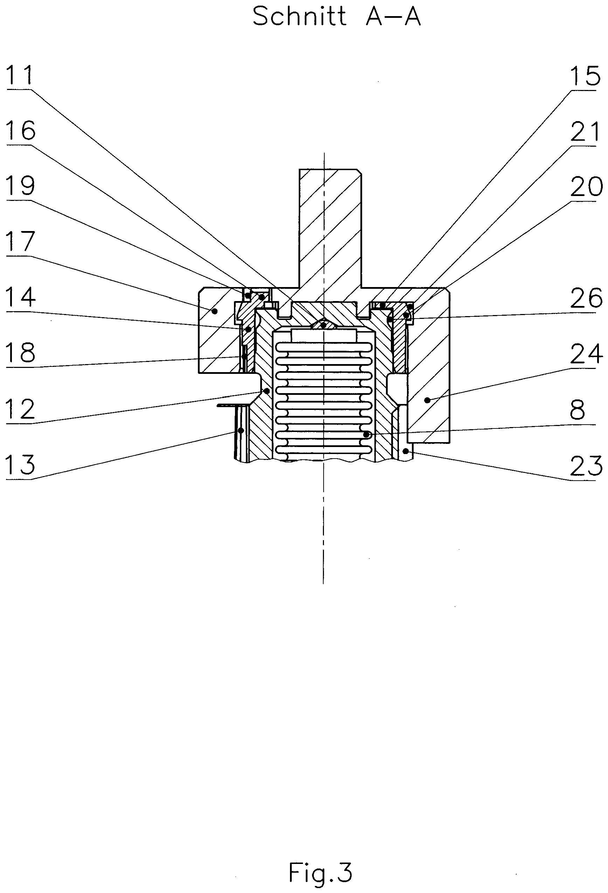

Auf dem Gewindestück 12 ist desweiteren ein rohrförmiges Raststück 14 fest und insbesondere verdrehsicher aufgepresst. Dazu ist die Mantelfläche des Gewindestücks 12 in diesem Bereich zusätzlich mit einer Rändelung versehen. Mit einem umlaufenden inneren Bund 15 stützt sich das aufgepresste Raststück 14 auf der Stirnfläche des Gewindestücks 12 ab. Zusätzlich weist der Bund 15 auf seiner dem Gewindestück 12 abgewandten Stirnseite ein aufragendes Anschlagelement 16 auf, dessen Funktion weiter unten näher erläutert wird (Fig. 3).

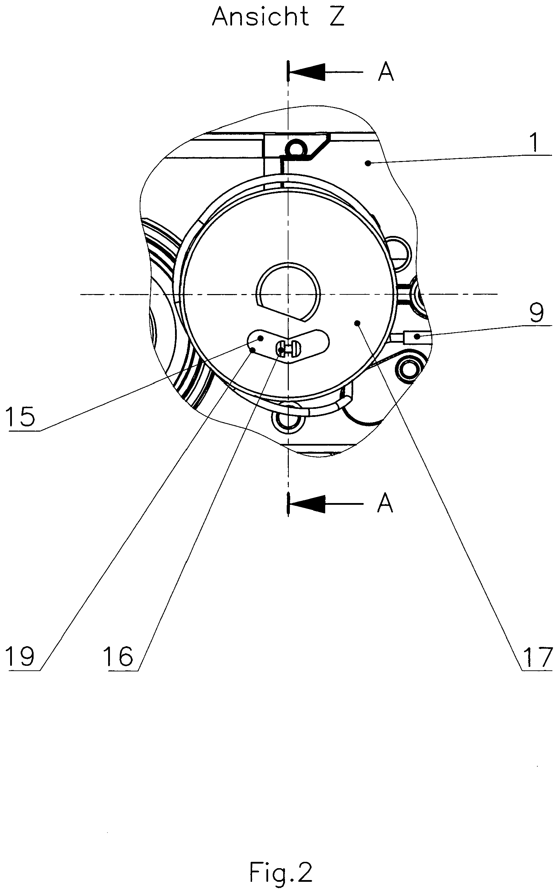

Ein topfförmiges Einstellelement 17 ist axial derart auf das Raststück 14 aufgesetzt, dass es mit seiner Ausnehmung 18 das Raststück 14 und teilweise auch das Gewindestück 12 umfasst. Dabei dient ein in der Stirnfläche des Einstellelementes 17 befindlicher Durchbruch als Führungskontur 19 für das in ihn hineinragende und weiter oben bereits beschriebene Anschlagelement 16 (Fig. 2). Um eine Demontage von Einstellelement 17 und Raststück 14 zum Entfernen des Anschlagelementes 16 aus der Führungskontur 19 zu verhindern, besitzt das Raststück 14 auf seiner äußeren zylindrischen Oberfläche zumindest teilweise einen Rastbund 20, der in eine in der Innenwandung der Ausnehmung 18 befindliche umlaufende Rastnut 21 hineinragt.

Im Einstellelement 17 ist desweiteren eine Arretierung zur verdrehsicheren Verbindung mit dem Gewindestück 12 vorhanden. Sie wird in diesem Ausführungsbeispiel durch zwei gegenüberliegend in die Mantelfläche des Einstellelementes 17 eindrehbare Schrauben 22 gebildet.

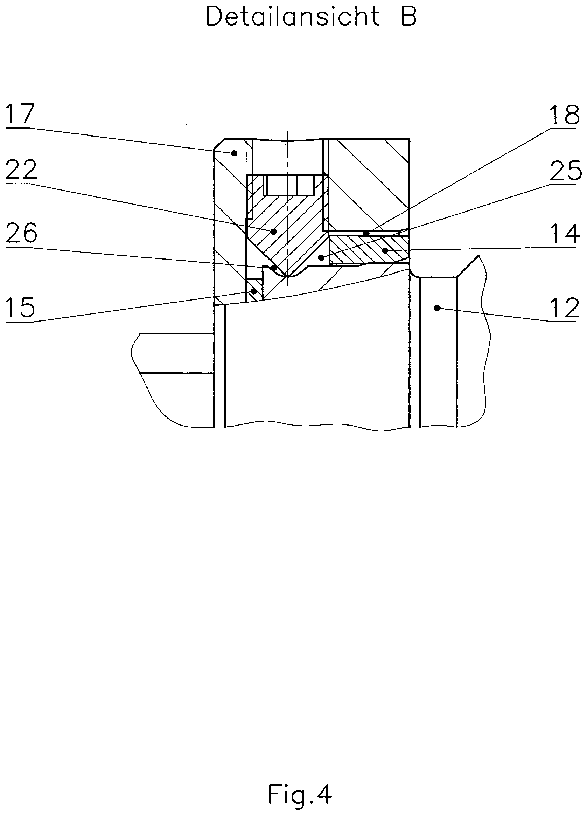

Es versteht sich dabei von selbst, dass das Raststück 14 in diesen Bereichen Freimachungen 25 aufweist, um die gewünschte feste Verbindung zwischen Einstellelement 17 und Gewindestück 12 herzustellen. Durch, wie in diesem Ausführungsbeispiel erfolgt, die Verwendung von Schrauben 22, die mit einer Spitze versehen sind, und eine im Gewindestück 12 eingebrachte umlaufende Nut 26, in die die Schrauben 22 hineingedreht werden, kann die Verbindung noch sicherer gestaltet werden (Fig. 4).

Notwendige Anschläge zur Begrenzung der Drehbewegung des Einstellelementes 17 werden durch eine am Aufsatz 13 des Gehäuses 1 befindliche Rippe 23 und eine teilweise Verlängerung 24 der Mantelfläche des Einstellelementes 17 gebildet.

Um, wie normalerweise üblich, einen gewünschten Wert der Temperatur aus dem vom Hersteller der Gasregelarmatur vorgegebenen Sollwertbereich einzustellen, wird das Einstellelement 17 innerhalb des durch die Anschläge, gebildet von Rippe 23 und Verlängerung 24, begrenzten Verstellbereiches verdreht.

Soll nun durch den Anwender eine nachträgliche Verschiebung des vom Hersteller der Gasregelarmatur vorgegebenen Sollwertbereiches erfolgen, so ist zuerst die Arretierung zwischen Gewindestück 12 und Einstellelement 17 zu lösen. Dann kann das Einstellelement 17 innerhalb des durch die Führungskontur 19 und des Anschlagelementes 16 vorgegebenen Bereiches verdreht werden. Anschließend ist die Arretierung wieder herzustellen.

Eine größere Verschiebung des Sollwertbereiches ist auf Grund der zerstörungsfrei nicht mehr lösbaren Verbindung zwischen Einstellelement 17, Raststück 14 und Gewindestück 12 nicht möglich.

### Aufstellung der Bezugszeichen

- 1: Gehäuse
- 2: Gaseingang
- 3: Gasausgang
- 4: Zündgasausgang
- 5: Bedienungselement
- 6: Druckregler
- 7: Stößel
- 8: Temperaturempfindliches Element
- 9: Kapillarleitung
- 10: Temperaturfühler
- 11: Kugel
- 12: Gewindestück
- 13: Aufsatz
- 14: Raststück
- 15: Bund
- 16: Anschlagelement
- 17: Einstellelement
- 18: Ausnehmung
- 19: Führungskontur
- 20: Rastbund
- 21: Rastnut
- 22: Schraube
- 23: Rippe
- 24: Verlängerung
- 25: Freimachung
- 26: Nut

## Patentansprüche

1. Gasregelarmatur für ein gasbetriebenes Heizgerät mit zumindest einem Ventil, das stromab des Hauptventils im Strömungsweg des Gasstromes für den Hauptbrenner angeordnet ist, das durch einen Schalter ansteuerbar ist, und das mit weiteren, sekundären Funktionselementen in einem Gehäuse (1) untergebracht ist, wobei der Schalter über einen längsbeweglichen Stößel (7) betätigbar ist, der aus dem gasführenden Bereich des Gehäuses (1) herausführt und dessen Lage über ein temperaturempfindliches Element (8) veränderbar ist, wobei sich das temperaturempfindliche Element (8) an einem seine Lage beeinflussenden Einstellelement (17), dessen zur Lagebeeinflussung des temperaturempfindlichen Elementes (8) dienende Betätigung durch am Gehäuse (1) und am Einstellelement (17) befindliche Anschläge begrenzt ist, abstützt, das manuell oder/und durch eine Antriebseinheit betätigbar ist, wobei das Einstellelement (17) ein in das Gehäuse (1) einschraubbares Gewindestück (12) aufweist und beide über eine lösbare Arretierung (22) verdrehsicher miteinander verbunden sind, **dadurch gekennzeichnet, dass** zwischen dem das Gewindestück (12) mit einer Ausnehmung (18) teilweise umfassenden topfförmigen Einstellelement (17) und dem Gewindestück (12) ein fest mit dem Gewindestück (12) verbundenes rohrförmiges Raststück (14) angeordnet ist, das mit einem stirnseitig aufragenden Anschlagelement (16) in eine Führungskontur (19) hineinragt, die durch einen im Einstellelement (17) befindlichen stirnseitigen Durchbruch gebildet wird.

2. Gasregelarmatur für ein gasbetriebenes Heizgerät nach Patentanspruch 1, **dadurch gekennzeichnet, dass** das Raststück (14) mit einem auf seiner äußeren zylindrischen Oberfläche zumindest teilweise vorhandenen Rastbund (20) in eine in der Innenwandung der Ausnehmung (18) befindliche umlaufende Rastnut (21) hineinragt.

## Claims

1. Gas regulator fitting for a gas-fired heating device with at least one valve that is arranged downstream of the main valve in the flow path of the gas flow for the main burner, that can be controlled by a switch and that is accommodated in a housing (1) with additional secondary functional elements, wherein the switch can be operated by a longitudinally movable tappet (7) which leads out of the gas-conducting area of the housing (1) and whose position can be altered via a temperature-sensitive element (8), wherein the temperature-sensitive element 8 is supported on a setting element (17) which alters its position and whose operation serving to alter the position of the temperature-sensitive element 8 is restricted by the stops located on the housing (1) and on the setting element (17), that can be operated manually and/or by a drive unit, wherein the setting element (17) has a threaded element (12) that can be screwed into the housing (1) and both are interconnected rigidly via a removable locking device (22), **characterized in that** a tubular latching part (14) securely connected to the threaded element (12) is arranged between the cup-shaped setting element (17) partly covering the threaded element (12) with a recess (18) and the threaded element (12), and the latching part (14) with a stop element (16) projecting on a front face protrudes into a guide contour (19) formed by an aperture located in the setting element (17) on the front side.

2. Gas regulator fitting for a gas-fired heating device according to claim 1, **characterized in that** the latching part (14) with a locking collar (20) on at least part of its external cylindrical surface protrudes into a circumferential locking groove (21) located in the inner wall of the recess 18).

## Revendications

1. Robinetterie de réglage de gaz conçue pour un dispositif de chauffage au gaz ayant au moins une soupape disposée dans le chemin d'écoulement du flux de gaz pour le bruleur principal, en aval de la soupape principale, la soupape pouvant être commandée par un commutateur et étant disposée dans un boîtier (1) avec d'autres éléments fonctionnels secondaires, le commutateur pouvant être actionné par un poussoir (7) déplaçable longitudinalement qui sort de la région du boîtier (1) conduisant le gaz et dont la position peut être modifiée par l'intermédiaire d'un élément sensible à la température (8), l'élément sensible à la température (8) s'appuyant sur un élément de réglage (17) influençant sa position dont l'actionnement qui sert à influencer la position de l'élément sensible à la température (8) est délimité par des butées situées au niveau du boîtier (1) et au niveau de l'élément de réglage (7), l'élément de réglage (17) pouvant être actionné manuellement ou/et par une unité d'entraînement, l'élément de réglage (17) comprenant une pièce filetée (12) pouvant être vissée dans le boîtier (1), et les deux étant reliés l'un à l'autre, sans pouvoir tourner, par l'intermédiaire d'un mécanisme de blocage (22) amovible, **caractérisée en ce qu**'une pièce d'encliquetage (14) tubulaire reliée solidairement à la pièce filetée (12) est disposée entre la pièce filetée (12) et l'élément de réglage (17), en forme de pot, entourant partiellement la pièce filetée (12) par un évidement (18), la pièce d'encliquetage (14) faisant saillie, par un élément de butée (16) qui fait saillie frontalement, dans un contour de guidage (19) formé par un passage frontal se trouvant dans l'élément de réglage (17).

2. Robinetterie de réglage de gaz conçue pour un dispositif de chauffage au gaz selon la revendication 1, **caractérisée en ce que** la pièce d'encliquetage (14) fait saillie dans une rainure d'encliquetage (21) périphérique située dans la paroi interne de l'évidement (18) par une collerette d'encliquetage (20) existant au moins partiellement sur la surface cylindrique extérieure de la pièce d'encliquetage (14).
